# EUROPEAN PATENT APPLICATION

(11) **EP 1 190 968 A2**
(43) Date of publication of application: **27.03.2002**
(21) Application number: 01308078.3
(22) Date of filing: 24.09.2001
(51) Int. Cl.: B65G 63/00

(54) **Loading arrangement and method for transferring of goods units**

(30) Priority: 22.09.2000 FI 20002089
(71) Applicant: CIMCORP OY, SF-28400 Ulvila (FI)
(72) Inventor: Laine, Kalevi, 28400 Ulvila (FI); Erkkilä, Harri, 28400 Ulivila (FI)
(74) Representative: Newby, Martin John

(57) **Abstract**

A loading arrangement (1) for large goods units (6), comprising a loading area (2), at least one bulk conveyor (3) for conveying goods units (6) to the loading area (2), a transfer equipment (4) for removing goods units (6) from the loading area and a robot system (5) for transferring goods units from the loading area to the transfer equipment. In the arrangement the working area of the robot system (5) encompasses the loading area and reaches both to an area of the bulk conveyor (3) and to an area of the transport equipment (4), and the robot system (5) comprises at least a part of the or each bulk conveyor, upper support structures (7') of the bulk conveyor(s), transport equipment and a gripping device mounted on the support structures. The invention also relates to a method of moving large goods units (6) from one to another transfer equipment, in which method information is transferred to a control unit (9) of the robot system before the arrival of the goods units at the loading area (2).

## Description

This invention relates to a loading arrangement for large goods units, which comprises a loading area in which is situated the following: at least a first bulk conveyor of a robot system for bringing the goods units to the loading area, transfer equipment for removing goods units from the loading area and goods units transferred by the bulk conveyor for loading to the transfer equipment.

The invention relates also to a method for moving large goods units from one to transfer equipment to another transfer equipment in a loading area, wherein goods units are brought to the loading area using at least a first bulk conveyor which is situated in the loading area, and the goods units are moved to the transport equipment using a robot system guided by the control unit of the robot system.

In this application the term "large goods unit" means a piece of goods, whose mass is hundreds of kilograms, typically over 500 kg.

Very commonly, goods units are loaded into transfer equipment by being collected from a storage area with the help of a forklift and moved to the transfer equipment, which may for example be a train, car or other transport carrier. When the goods units are manually loaded, among other things the use of the space is not so efficient as would be possible. Additionally the loading time is long. Moreover, on full loading of the transfer equipment it is not possible to obtain information of the type which could be exploited when unloading the same goods units.

Due to their shape, circular cross-section goods units, like paper rolls, present a particular challenge for effective loading, because the placement of cylindrical pieces beside and above each other is specially difficult. Inevitably empty spaces remain between the cylindrical surfaces of the goods units, and larger regions of empty space are created with larger diameter goods units. Also when piling or stacking in several layers, situations often occur, where goods units of smaller diameter cannot be placed beside previously loaded identical units in the same layer, because the empty space in the layer below at that location is too large.

An aim of the invention is to achieve a loading arrangement for goods units where the problems of the known technique are minimised. Especially the aim of the invention is to achieve a loading arrangement for large cylindrical goods units, wherein the loading is carried out totally automatically and is optimised. Another aim of the invention is to achieve a method for moving large goods units, wherein the removal of goods units from one transfer equipment to another happens as efficiently as possible.

The aims of the inventions are achieved by a loading arrangement according to claim 1 and a method of moving large goods units according to claim 7. The dependent claims define preferred or optional features of the invention. According to the invention there is provided a loading arrangement for large goods units comprising together, in a loading area, at least one whole (bulk) container for transporting the goods units to the loading area, a transfer equipment for removing goods units from the loading area, and a robot system for loading goods units into the transfer equipment. In the loading arrangement the loading area is formed from the working area of the robot system, which reaches both to an area of the bulk conveyor and an area of the transfer equipment, and the robot system comprises the bulk conveyor and upper support structures of the transfer equipment and a gripping device supported on the support structures.

The arrangement preferably further comprises a control unit of the robot system, which includes devices at least for saving data at least relating to each loaded goods unit. Advantageously the arrangement comprises the control unit of the robot system and goods unit data reading equipment arranged in co-operation with the bulk conveyor, the data reading equipment being able to read information for each goods unit and to save the information to the control unit of the robot system to be exploited in the loading situation.

The robot system of the arrangement comprises a gripping device, which is preferably essentially flat or equivalent and works with the help of low pressure developed between the gripping device and the goods unit. The gripping area of the gripping device is preferably variable, guided by the control unit based on its saved information relating to each goods unit, such that each time one achieves a suitable lifting area taking account of the mass and dimensions of the goods unit. To this end, the gripping device comprises advantageously at least one detachably arranged widening part of the gripping area. At least one widening part may be positioned in a placement position of the working area of the robot system. With such an arrangement automatic, optimised removal of goods units is possible.

In the method according to the invention goods units are conveyed from one transfer equipment to another transfer equipment wherein the goods units are brought to the loading area using at least a first bulk conveyor which is situated in the loading area, and the goods units are moved to the said another transport equipment using a robot system guided by a control unit of the robot system. The method is characterised by information concerning each goods unit being supplied to the control unit before the goods units reach the loading area. Conveniently the removal order and the loading order of goods units is specified exploiting the information for each goods unit before they are loaded. Each loaded module is specified beforehand, and the order of goods units is chosen so that the end result of loading is as required.

Information on the goods units brought to the loading area is read by data reading equipment before the goods units reach the loading area and this information is saved in the control unit of the robot system. The control unit compares, before arrival of the goods units at the loading area, transfer information with information read by the data reading equipment to ensure that each goods unit is moved to the correct place. The checking of the positions of the goods units is accomplished in the control unit based on the information of each said goods unit. This is made possible by providing each goods unit with a data saving arrangement, such as a bar code, including individual information concerning the goods unit in question. Thus information for each goods unit is according to the invention advantageously obtained from two different sources which information is supplied to the control unit. In particular "movement" information for each goods unit is obtained before the arrival of the goods units at the loading area and specific "read" information is obtained by reading the goods units with the data reading equipment.

Additionally information as to the placement position of the goods units can be supplied to the control unit, which placement place information is used subsequently when determining the positioning of the next goods units by the transfer equipment. The method is especially useful for the loading and/or unloading of cylindrical articles, such as paper rolls, when the information for each goods unit comprises at least information of diameter and height of the cylindrical articles.

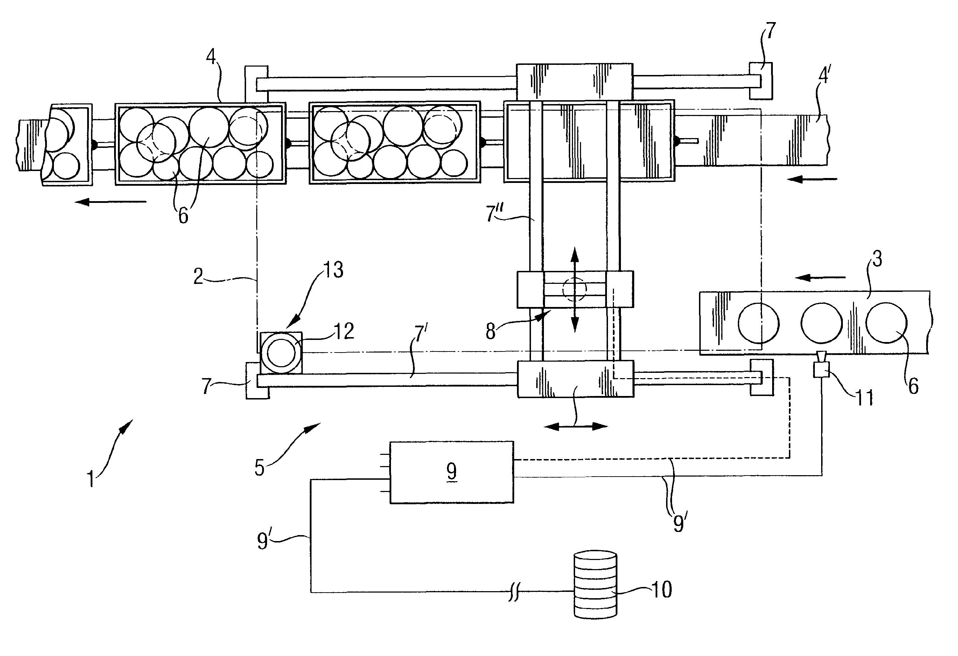

Embodiments of the invention will be described, by way of example only, with particular reference to the accompanying drawing which shows schematically a loading arrangement according to the present invention.

The drawing shows a loading arrangement 1 for goods units 6 such as paper rolls. The loading arrangement comprises a loading area 2 and at least one bulk conveyor 3 for bring goods units 6 to the loading area. Although the drawing shows only one bulk conveyor, it is possible for several conveyors to be provided. The loading arrangement also comprises a transfer equipment 4 for removing from the loading area 2 goods units, e.g. paper rolls, previously supplied to the loading area. A robot system 5 is arranged at the loading area and has a working area which encompasses or extends over the loading area 2. The working area of the robot system also reaches both to parts of the bulk conveyor 3 and to the transfer equipment 4. The robot system 5 makes it possible to transfer paper rolls, or other goods units 6, from the conveyor 3 to the transfer equipment 4. This transfer may, accordingly, be accomplished fully automatically. The robot system 5 comprises from base structures 7 supporting a pair of spaced apart rails 7' on which a transverse carriage having spaced apart transverse rails 7" is slidably supported. On this transverse carriage is movably carried a gripping device 8 which is movable along the rails 7". The robot system also comprises a control unit 9 which includes storage means for storing data of each of the goods unit brought to the loading area by the conveyor 3. The robot system receives information supplied to the control unit 9 on the goods units before they reach the loading area. The gripping device of the robot system is able to move in a desired manner under the control, for example, of a separate information source 10, which can for example be a part of process control arrangement of a paper mill. Several data transfer connections 9' are also provided to the control unit 9. The loading arrangement additionally comprises data reading equipment 11 for reading data from goods units passing along the conveyor 3 to the loading area 2. Thus information concerning each goods unit is read by the equipment 11 and is supplied to the control unit 9, via data transfer connection 9', where it is stored or saved for exploitation in the loading action. The read information is used at least so that equivalence of the information originated from the information source 10 for a certain roll 6 can be checked.

As can be seen in the drawing the transfer equipment 4 comprises, by way of example, several movable cars or equivalents which are connected or coupled together and which run along guiding means 4' such as rails or the like. The guiding means is arranged with respect to the working area 2 of the robot system so that it reaches at least in two different direction outside the working area. This allows the cars or the like to move through the loading area as loading of goods units into the cars proceeds.

The gripping device 8 of the robot system has a substantially flat gripping area and can be adapted to grip differently sized goods units 6 in dependence on the saved information of each goods unit. This is made possible by the gripping device 8 having at least one detachable extension part 12 which is attached to the gripping device 8 by the robot system when needed. In particular within the working area of the robot system at least one placement position 13 is provided for receiving at least one extension part 12 of the gripping area in question.

Paper rolls or other goods units 6 are brought to the loading area by transfer equipment in the form of the conveyor 3. The goods units are then moved to the transfer equipment 4 using the robot system 5 guided by the control unit 9 of the robot system. So as to optimise loading of the goods units 6, information on each goods unit is supplied to the control unit 9 before the goods units reach the loading area. The control unit 9 of the robot system is able to determine, for example in an optimised manner, the moving or loading order of the goods units before the actual loading takes place. In this manner loading can be achieved in an optimal way. Advantageously the order of removing or loading is already specified or determined before loading commences. With this method any empty space between the goods units can be minimised. Also goods units can be stacked on top of each other without, for example, damaging the goods units because they are too heavy. So as to ensure that the goods units are in a specified order or arrangement, information for each goods unit is read prior to the goods unit reaching the loading area 2 using a data reading equipment 11 co-operating with the control unit 9 and the bulk conveyor (3). The desired arrangement of the goods units in the loading area is accomplished in the control unit 9, the checking of the placement to the transport equipment of the goods units being based on the information read from each goods unit. A suitable data saving arrangement, such as a bar code, is provided on the goods units 6, e.g. the paper rolls, for this purpose.

During loading placement information is stored or saved to the control unit for each goods unit's transfer equipment, which placement information is used together with information on the movements of the next goods units - like in the situation where paper rolls 6 are unloaded from the transfer equipment 4 of goods units based on the information of each goods unit. This placement data can go along with goods units to the following moving place or it can be delivered in separate data, when both data and quantity of goods includes now also identification information, which combines the information to the quantity of goods in question. The unloading can also be accomplished automatically.

The invention has been described above with particular reference to goods units in the form of paper rolls. However it is clear that the invention can also be used with other types of goods units, in particular other types of cylindrical objects. The foregoing description only presents examples of the invention and the invention is not limited to the embodiments particularly described and illustrated, but several variations are possible in the scope of following claims.

## Claims

1. A loading arrangement (1) for large goods units (6), comprising a loading area (2), at least one bulk conveyor (3) for bringing goods units (6) to the loading area (2), transfer equipment (4) for transferring goods units (6) away from the loading area (2) and a robot system (5) for loading to the transfer equipment (4) goods units transferred by the bulk conveyor(s), **characterised in that** the working area of the robot system (5) encompasses said loading area and reaches both to an area of the bulk conveyor (3) and to an area of the transport equipment (4), and **in that** the robot system (5) comprises at least a part of the or each bulk conveyor, upper support structures (7') of the bulk conveyor(s), transport equipment and a gripping device mounted on the support structures.

2. A loading arrangement according to claim 1, **characterised in that** the robot system includes a control unit (9) having means for storing data concerning information about the goods units and means for transferring information from a separate information source (10) for each goods unit before the goods unit reaches the loading area.

3. A loading arrangement according to claim 2, further comprising data reading equipment (11) arranged relative to the bulk conveyor(s) to read information concerning the goods units from the goods unit as they are conveyed on the bulk conveyor(s) and to save the read information to the control unit (9) for subsequent use in controlling the loading operation.

4. A loading arrangement according to claim 1, **characterised in that** the transfer equipment (4) comprises coupled together movable cars or the like and guiding means (4') for controlling the path taken by the cars arrangement (4') relative to the working area (2) of the robot system so that it extends in at least two different directions outside the working area.

5. A loading arrangement according to any of the preceding claims, **characterised in that** the gripping device (8) of the robot system (5) is essentially flat or equivalent and **in that** the gripping area or dimension of the gripping device is changeable under control of the control unit (9) based on the saved information of each goods unit.

6. A loading arrangement according to claim 5, **characterised in** the gripping device comprises at least one detachably arranged extension part (12), and **in that** in the working area of the robot system there is arranged a position (13) for at least one extension part.

7. A method of moving large goods units (6) comprising conveying the goods units from one transfer equipment (3) to another transfer equipment (4) wherein the goods units (6) are brought to a loading area (2) using at least a first bulk conveyor (3) which is situated in the loading area (2), and the goods units are moved to the said another transport equipment (4) using a robot system (5) guided by a control unit (9) of the robot system, **characterised in that** information concerning each goods unit (6) is supplied to the control unit (9) before the goods units reach the loading area (2).

8. A method according to claim 7, **characterised in that** the transfer/loading order of the goods units is determined in the control unit (9) of the robot system using the information of each goods unit before the loading or during the loading.

9. A method according to claim 8, **characterised in that** information concerning the good units (6) conveyed to the loading area (2) is read with a data reading equipment (11) arranged to read information from the goods units on the bulk conveyor(s), **in that** the read information is saved to the control unit (9) of the robot system and **in that** checking of the placement to the transport equipment is carried out by the control unit (9) based on the read information from the goods units.

10. A method according to claim 9, **characterised in that** in each goods unit (6) has data means, such as a bar code, associated therewith including information individual to the goods unit (6) in question.

11. A method according to claim 7, **characterised in that** the placing place information of each goods unit's (6) conveyor equipment is saved in the control unit (9), which placing place information is exploited in association with the next transfers of goods units.

12. A method according to claim 7, **characterised in that** the method is used for loading of cylindrical goods units, such as paper rolls (6), and **in that** the information for each goods unit comprises at least the diameter and the height or axial length of the cylindrical goods unit.

13. A method according to claim 7 or 8, **characterised in that** the goods units are unloaded from the transport equipment based on the information of each goods unit.

14. A method according to claim 11, **characterised in that** said placing place information is delivered as separate information, when both the information and the goods amount include identification information, which combines the information to each goods amount.

15. A load transfer system for moving goods units (6), preferably large goods units, into and out of a loading area (2), comprising at least one conveyor (3) for conveying the goods units to the loading area (2), transfer equipment (4) for moving goods units moved into the loading area away from the loading area, and robot means (50 for moving the goods units form the loading area (2) to transfer equipment (4) and having a working area extending over the load area and reaching to said conveyor(s) and to said transfer equipment.
